# EUROPEAN PATENT SPECIFICATION

(11) **EP 3 129 685 B1**
(45) Date of publication and mention of the grant of the patent: **07.08.2019**
(21) Application number: 15717762.7
(22) Date of filing: 08.04.2015
(51) Int. Cl.: F16K 1/36, F16K 1/46

(54) **FLOW PATH VELOCITY MODIFIER FOR A CONTROL VALVE**
STRÖMUNGSWEGGESCHWINDIGKEITSMODIFIKATOR FÜR EIN STEUERVENTIL
DISPOSITIF DE MODIFICATION DE VITESSE DE TRAJECTOIRE D'ÉCOULEMENT POUR UNE VANNE DE COMMANDE

(30) Priority: 08.04.2014 US 201461976828 P
(43) Date of publication of application: 15.02.2017
(73) Proprietor: Emerson Process Management Regulator Technologies, Inc., McKinney, TX 75070 (US)
(72) Inventor: ROPER, Daniel G., Lucas, TX 75002 (US); MCKINNEY, Harold J., Durant, OK 74701 (US)
(74) Representative: Cabinet Plasseraud
(86) International application number: PCT/US2015/024805
(87) International publication number: WO 2015/157352

(56) References cited:
- EP-A1- 0 140 510
- EP-B1- 2 188 555
- GB-A- 985 805
- GB-A- 2 136 540
- GB-A- 2 222 663
- US-A- 2 311 009
- US-A- 2 969 218
- US-A- 3 039 488
- US-A- 3 057 372
- US-A- 3 486 528

## Description

### FIELD OF DISCLOSURE

The present disclosure generally relates to a fluid control valve and, more particularly, to a flow path velocity modifier for a fluid control valve.

### BACKGROUND

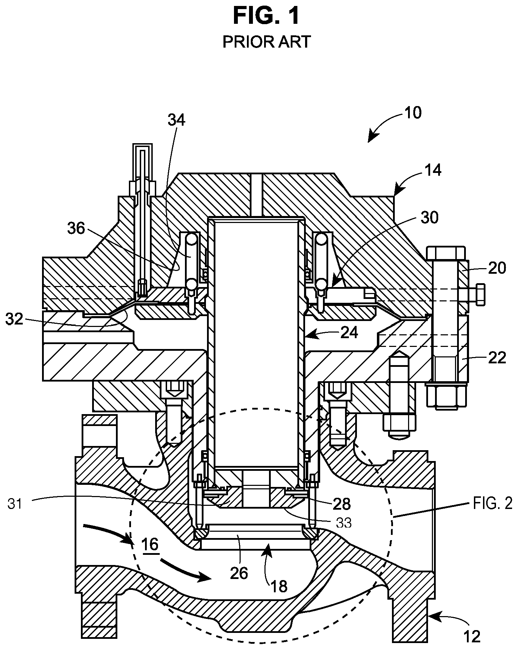

Fluid control devices include various categories of equipment including control valves and regulators. Such control devices are adapted to be coupled within a fluid process control system such as chemical treatment systems, natural gas delivery systems, etc., for controlling the flow of a fluid therethrough. Each control device defines a fluid flow-path and includes a control member for adjusting a dimension of the flow-path. For example, Fig. 1 depicts a known control valve regulator assembly 10 according to EP 2 188 555 including a valve body 12 and an actuator 14. The valve body 12 defines a flow-path 16 and includes a throat 18. In Fig. 1, the regulator assembly 10 is configured in a flow-up configuration. The actuator 14 includes an upper actuator casing 20, a lower actuator casing 22, a diaphragm subassembly 30 including a diaphragm 32, and a control member 24.

The control member 24 is disposed within the upper and lower actuator casings 20, 22 and is adapted for bi-directional displacement in response to changes in pressure across the diaphragm subassembly 30. So configured, the control member 24 controls the flow of fluid through the throat 18. In some applications, a retainer 31 is secured to the bottom of the control member 24. The retainer 31 secures a sealing element 28 to the bottom of the control member 24. The retainer 31 includes a lower surface 33, distal to the control member 24 that has a generally convex shape, which extends outwardly beyond the sealing element 28, and past which the fluid flows when the regulator assembly 10 is in the open position. Additionally, the regulator assembly 10 includes a seat ring 26 disposed in the throat 18 of the valve body 12. When the outlet pressure of the valve body 12 is high, the sealing element 28 of the control member 24 may sealingly engage the seat ring 26 and close the throat 18. Similarly, absent any pressure in the actuator 14 or upon the failure of the diaphragm 32, a coil spring 34 disposed within an annular cavity portion 36 of the upper actuator casing 20 biases the control member 24 into the closed position. Such a regulator is commonly known as a "fail close" regulator. "Fail open" regulators operate similar to "fail closed" regulators; however, upon failure of the diaphragm, a spring biases the control member open, rather than closed.

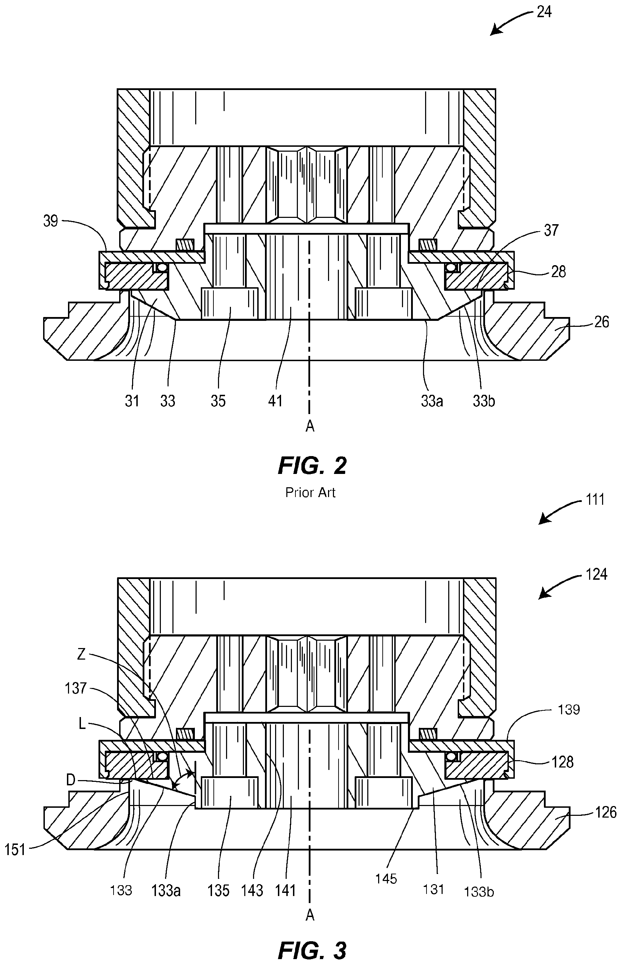

Turning now to Fig. 2, the retainer 31 is illustrated in more detail. The retainer 31 is secured to the bottom of the control member 24 by a plurality of fasteners 35. The sealing element 28 is disposed between an upper surface 37 of the retainer 31 and a covering flange 39, which extends radially outward from the control member 24. The bottom surface 33 of the retainer 31 includes a first portion 33a, proximate a longitudinal axis A of the control member 24, the first portion 33a extending perpendicular to the longitudinal axis A of the control member 24 for a distance and a second portion 33b that angles radially upward, towards the sealing element 28. Generally speaking, the second portion 33b is angled about 30 degrees with respect to the longitudinal axis A. A balance cavity 41 may extend through the retainer 31 in some cases where a balanced valve is desired. When a balance cavity 41 extends through the retainer, the first portion 33a may extend outwardly from an edge of the balance cavity 41. The balance cavity 41 is a cylindrical opening having a longitudinal axis that is coincident with the longitudinal axis A of the control member 24. In other words, the retainer 31 has a longitudinal axis that is coincident with the longitudinal axis A.

Generally, valve sizing for a particular operation is determined such that the control member 24 will normally operate in the middle 80% of control member 24 travel for a majority of the operational time. By operating in the middle 80%, flow between the seat ring 26 and the sealing element 28 is predictable and smooth. However, in some cases, where a properly sized valve is not available, a valve that is larger than optimum may be used. In this case, the control member 24 and thus the sealing element 28 may operate a majority of the time relatively close to the seat ring 26, for example, within the closest 20% of the control member 24 travel to the seat ring 26, which can cause relatively high fluctuating flow velocities between the sealing element 28 and the seat ring 26 due to the formation of restricted flow areas. These high flow velocities can damage the relatively soft sealing element 28, which affects the shutoff capability of the control member 24.

### SUMMARY

A flow path velocity modifier allows a control member of a control valve to operate very close to a seat ring while reducing or eliminating restricted flow areas, which results in greatly reduced fluctuating flow velocities between the sealing element and the seat ring. As a result, sealing elements made of relatively soft materials may be used without fear of damage. There is provided a control member assembly according to claim 1.

### BRIEF DESCRIPTION OF THE DRAWINGS

Fig. 1 is a cross-sectional side view of one conventional control valve;
Fig. 2 is a cross-sectional side view of a portion of a control member and valve seat of the convention control valve of Fig. 1; and
Fig. 3 is a cross-sectional side view of a portion of a control member and valve seat including a flow path velocity modifier constructed in accordance with the teachings of the disclosure.

### DETAILED DESCRIPTION

Turning now to Fig. 3, a sealing element assembly 111 that is constructed in accordance with the teachings of the disclosure is illustrated. The sealing element assembly 111 may be inserted into a known control valve, such as the control valve 10 of Fig. 1. When the sealing assembly 111 is inserted into a known control valve, an oversized valve may be used for a particular operation without creating detrimental restricted flow areas and higher fluctuating flow velocities that can damage the sealing element 128.

A retainer 131 having a body portion is secured to the bottom of a control member 124 by a plurality of fasteners 135. In some embodiments, other methods of securing the retainer 131 to the control member 124 may be used, such as, for example, interference fits, welds, adhesives, or other securing elements. The sealing element 128 is disposed between an upper surface 137 of the retainer 131 and a covering flange 139, which extends radially outward from the control member 124. The bottom surface 133 of the retainer 131 includes a first portion 133a, proximate a longitudinal axis A of the control member 124, the first portion 133a extending parallel to the longitudinal axis A of the control member 124 for a distance and a second portion 133b that angles radially upward, towards the sealing element 128 from the first portion 133a. Generally speaking, the second portion 133b is angled greater than 60 degrees with respect to the longitudinal axis A. In other words, an angle Z that is formed between the longitudinal axis A and the bottom surface of the second portion is greater than 60 degrees, preferably greater than 60 degrees but less than 90 degrees, and more preferably between 70 degrees and 80 degrees. Angles in these ranges optimize smoothing of the velocity fluctuations, and thus reduce damage to the sealing element 128.

A balance cavity 141 may extend through the retainer 131 in some cases where a balanced valve is desired. When a balance cavity 141 extends through the retainer, the first portion 133a may extend parallel to an edge 143 of the balance cavity 141, the first portion 133a forming a plug extension 145 that extends longitudinally outward, away from the control member 124. In some embodiments the plug extension may be substantially cylindrical in shape. The balance cavity 141 is a cylindrical opening having a longitudinal axis that is coincident with the longitudinal axis A of the control member 124. In other words, the retainer 131 has a longitudinal axis that is coincident with the longitudinal axis A.

The second surface 133b extends away from the first surface 133a and towards the sealing element 128, meeting the sealing element 128 at a location L. When the control member 124 is in the closed position, a distance D is formed between the location L and an inner surface 151 of the valve seat 126. In some embodiments, the distance D may be approximately 10% of the length of the second surface 133b. By leaving the distance D between the second surface 133b and the inner surface 151 of the valve seat 126, flow acceleration is reduced when the sealing element 128 is very close to the valve seat 126. As a result, flow velocities have reduced fluctuations (i.e., are smoothed) as the control member 124 moves towards the closed position, which reduces wear on the valve seat 126 and the sealing element 128.

In light of the foregoing, the description of the present disclosure should be understood as merely providing examples of the present invention and, thus, variations that do not depart from the scope of the claims are intended to be within the scope of the invention.

## Claims

1. A control member assembly (111) for a control valve, the control member assembly (111) comprising:
a control member (124);
a retainer (131) secured to one end of the control member (124), the retainer (131) having a body portion, the body portion having a longitudinal axis, a top surface (137), and a bottom surface (133), the bottom surface having a first portion that extends only parallel to the longitudinal axis and a second portion that extends away from the first portion (133a) at a constant angle (Z), the second portion (133b) directly intersecting the first portion (133a);
a sealing element (128) disposed between the top surface (137) of the retainer (131) and the control member (124); and
a valve seat (126),
wherein the second portion (133b) extends from the first portion (133a) until the sealing element (128) radially upward along the constant angle (Z), meeting the sealing element (128) at a first location and when the control member (124) is in a closed position, the second portion (133b) and an inner surface of the valve seat (126) are spaced from one another by a distance,
and wherein the angle (Z) is more than 60 degrees but less than 90 degrees with respect to the longitudinal axis.

2. The control member assembly (111) of claim 1, wherein the distance may be approximately 10% of the length of the second portion (133b).

3. The control member assembly (111) of any of claims 1 and 2, wherein the second portion (133b) is angled more than 70 degrees and less than 80 degrees with respect to the longitudinal axis.

4. The control member assembly (111) of any of claims 1 to 3, wherein the first portion (133a) forms a plug extension that extends longitudinally outward, away from the control member (124).

5. The control member assembly (111) of claim 4, wherein the plug extension is cylindrical in shape.

6. The control member assembly (111) of any of claims 4 and 5, wherein the retainer includes a balance cavity (141) extending therethrough, the first portion (133a) extending parallel to an edge (143) of the balance cavity (141).

7. A control valve (10) comprising:
a valve body (12) having a flow path and a throat (18);
the control member assembly (111) of any of claims 1 to 6 disposed within the valve body (12);
a valve seat (126) being disposed within the valve body (12) proximate the throat (18)wherein the control member (124) is longitudinally movable within the valve body (12) to bring the sealing element (128) into contact with the valve seat (126) in a closed position, which prevents fluid flow through the throat (18).

## Patentansprüche

1. Steuerelement-Anordnung (111) für ein Steuerventil, wobei die Steuerelement-Anordnung (111) umfasst:
ein Steuerelement (124);
ein Rückhalteelement (131), welches an einem Ende des Steuerelements (124) gesichert ist, wobei das Rückhalteelement (131) einen Körperabschnitt, wobei der Körperabschnitt eine longitudinale Achse aufweist, eine obere Fläche (137) und eine untere Fläche (133) aufweist, wobei die untere Fläche einen ersten Abschnitt, welcher sich lediglich parallel zu der longitudinalen Achse erstreckt, und einen zweiten Abschnitt aufweist, welcher sich weg von dem ersten Abschnitt (133a) bei einem konstanten Winkel (Z) erstreckt, wobei der zweite Abschnitt (133b) den ersten Abschnitt (133a) direkt schneidet;
ein Dichtungselement (128), welches zwischen der oberen Fläche (137) des Halteelements (131) und dem Steuerelement (124) angeordnet ist; und
einen Ventilsitz (126),
wobei sich der zweite Abschnitt (133b) von dem ersten Abschnitt (133a) bis zu dem Dichtungselement (128) radial nach oben entlang des konstanten Winkels (Z) erstreckt, das Dichtungselement (128) an einer ersten Position treffend, und wenn das Steuerelement (124) in einer geschlossenen Position ist, der zweite Abschnitt (133b) und eine innere Fläche des Ventilsitzes (126) um eine Distanz voneinander beabstandet sind,
und wobei der Winkel (Z) mehr als 60 Grad aber weniger als 90 Grad bezüglich der longitudinalen Achse beträgt.

2. Steuerelement-Anordnung (111) nach Anspruch 1, wobei die Distanz etwa 10% der Länge des zweiten Abschnitts (133b) betragen kann.

3. Steuerelement-Anordnung (111) nach Anspruch 1 oder 2, wobei der zweite Abschnitt (133b) um mehr als 70 Grad und weniger als 80 Grad bezüglich der longitudinalen Achse abgewinkelt ist.

4. Steuerelement-Anordnung (111) nach einem der Ansprüche 1 bis 3, wobei der erste Abschnitt (133a) eine Stopfenerstreckung bildet, welche sich von dem Steuerelement (124) longitudinal nach außen erstreckt.

5. Steuerelement-Anordnung (111) nach Anspruch 4, wobei die Stopfenerstreckung von zylindrischer Form ist.

6. Steuerelement-Anordnung (111) nach einem der Ansprüche 4 und 5, wobei das Rückhalteelement einen Ausgleichshohlraum (141) umfasst, welcher sich dahindurch erstreckt, wobei sich der erste Abschnitt (133a) parallel zu einem Rand (143) des Ausgleichshohlraums (141) erstreckt.

7. Steuerventil (10), umfassend:
einen Ventilkörper (12), welcher einen Strömungspfad und einen Hals (18) aufweist;
die Steuerelement-Anordnung (111) nach einem der Ansprüche 1 bis 6 innerhalb des Ventilkörpers (12) angeordnet;
einen Ventilsitz (126), welcher innerhalb des Ventilkörpers (12) nahe zu dem Hals (18) angeordnet ist, wobei das Steuerelement (124) longitudinal innerhalb des Ventilkörpers (12) bewegbar ist, um das Dichtungselement (128) in Kontakt mit dem Ventilsitz (126) in einer geschlossenen Position zu bringen, welche Fluid daran hindert, durch den Hals (18) zu strömen.

## Revendications

1. Assemblage d'organe de commande (111) pour une vanne de commande, l'assemblage d'organe de commande (111) comprenant :
un organe de commande (124) ;
une fixation (131) attachée à une extrémité de l'organe de commande (124), la fixation (131) ayant une portion de corps, la portion de corps ayant un axe longitudinal, une surface supérieure (137), et une surface inférieure (133), la surface inférieure ayant une première portion qui s'étend uniquement parallèlement à l'axe longitudinal et une seconde portion qui s'étend à l'opposé de la première portion (133a) à un angle constant (Z), la seconde portion (133b) croisant directement la première portion (133a) ;
un élément d'étanchéité (128) disposé entre la surface supérieure (137) de la fixation (131) et l'organe de commande (124) ; et
un siège de vanne (126),
dans lequel la seconde portion (133b) s'étend depuis la première portion (133a) jusqu'à l'élément d'étanchéité (28) radialement vers le haut le long de l'angle constant (Z), en rejoignant l'élément d'étanchéité (128) à un premier emplacement, et, lorsque l'organe de commande (124) est à une position fermée, la seconde portion (133b) et une surface intérieure du siège de vanne (126) sont espacées l'une de l'autre d'une distance,
et dans lequel l'angle (Z) est supérieur à 60 degrés mais inférieur à 90 degrés par rapport à l'axe longitudinal.

2. Assemblage d'organe de commande (111) selon la revendication 1, dans lequel la distance peut être approximativement 10 % de la longueur de la seconde portion (133b).

3. Assemblage d'organe de commande (111) selon la revendication 1 et 2, dans lequel la seconde portion (133b) est inclinée de plus de 70 degrés et de moins de 80 degrés par rapport à l'axe longitudinal.

4. Assemblage d'organe de commande (111) selon l'une quelconque des revendications 1 à 3, dans lequel la première portion (133a) forme une extension de bouchon qui s'étend longitudinalement vers l'extérieur, à l'opposé de l'organe de commande (124).

5. Assemblage d'organe de commande (111) selon la revendication 4, dans lequel l'extension de bouchon est de forme cylindrique.

6. Assemblage d'organe de commande (111) selon la revendication 4 et 5, dans lequel la fixation inclut une cavité d'équilibre (141) s'étendant à travers celle-ci, la première portion (133a) s'étendant parallèlement à un bord (143) de la cavité d'équilibre (141).

7. Vanne de commande (10) comprenant :
un corps de vanne (12) ayant une voie d'écoulement et une gorge (18) ;
l'assemblage d'organe de commande (111) selon l'une quelconque des revendications 1 à 6, disposé à l'intérieur du corps de vanne (12) ;
un siège de vanne (126) disposé à l'intérieur du corps de vanne (12) à proximité de la gorge (18), dans laquelle l'organe de commande (124) est mobile longitudinalement à l'intérieur du corps de vanne (12) pour mettre l'élément d'étanchéité (128) en contact avec le siège de vanne (126) à une position fermée, ce qui empêche un écoulement de fluide à travers la gorge (18).
